# Europäisches Patentamt
# European Patent Office
# Office européen des brevets

(19)

(11) Numéro de publication: **0 163 344**
**B1**

(12)

# FASCICULE DE BREVET EUROPÉEN

(45) Date de publication du fascicule du brevet:
**18.05.88**

(51) Int. Cl.⁴: **G 21 C 19/02**

(21) Numéro de dépôt: **85200757.4**

(22) Date de dépôt: **13.05.85**

---

(54) **Dispositif de verrouillage pour une installation de permutation des barres de controle et des grappes de bouchons.**

---

(30) Priorité: **16.05.84 EP 84200704**

(43) Date de publication de la demande:
**04.12.85 Bulletin 85/49**

(45) Mention de la délivrance du brevet:
**18.05.88 Bulletin 88/20**

(84) Etats contractants désignés:
**AT BE CH DE FR GB IT LI LU NL SE**

(56) Documents cité:
**DE-B-1 043 530**
**FR-A-2 234 637**
**GB-A-919 866**
**GB-A-1 002 007**
**US-A-4 069 766**

**PATENTS ABSTRACTS OF JAPAN, vol. 3, no. 158,
25. décembre 1979, page 36 M 86 & JP-A-54134288
PATENS ABSTRACTS OF JAPAN, vol. 1, no. 122, 14.
octobre 1977, page 3957 M 77 & JP-A-5259295
PATENTS ABSTRACTS OF JAPAN, vol. 4, no. 13, 30.
janvier 1980, page 96 M 90 & JP-A-54150586**

(73) Titulaire: **ACEC, Société Anonyme, Avenue Lloyd
George 7, B-1050 Bruxelles (BE)**

(72) Inventeur: **Fabris, Mirko, 5, Rue de l'Argayon,
B-1400 Nivelles (BE)**

---

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention se rapporte à un dispositif de verrouillage destiné à une installation de permutation de barres de contrôle et des grappes de bouchons utilisée lors des manipulations effectuées au cours du chargement du réacteur nucléaire.

Une séquence de chargement s'opère après chaque cycle d'irradiation, généralement de l'ordre d'une année, et demande de nombreuses manipulations des assemblages renfermant la matière fissile. Il faut notamment retirer ou insérer des barres de contrôle ou des grappes de bouchons dans les assemblages que l'on déplace, que l'on retire ou que l'on insère dans le coeur du réacteur.

Les barres de contrôle sont permutées d'un assemblage à l'autre à l'aide d'un dispositif de permutation monté à demeure dans la piscine du réacteur qui, lors de la séquence de chargement, est complètement immergée.

Ce dispositif de permutation comporte un châssis, ancré dans le fond de la piscine, qui supporte des rails sur lesquels se déplacent un chariot muni de paniers destinés à recevoir des assemblages. Ce chariot est actionné depuis la surface par un câble sous-tendu par des poulies qui le conduisent depuis le chariot jusqu'à un dispositif d'actionnement situé en surface. La position de ce chariot est déterminé par des butées, disposées le long des rails, et repérée en surface par des marques sur le câble. Un tube-guide fixé à une paroi de la piscine du réacteur assure un bon guidage vertical d'une barre de contrôle lorsqu'elle est actionnée, depuis la surface, par un treuil électrique.

D'autre part, les manipulations classiques de permutation des grappes de bouchons, faites manuellement à l'aide d'un outil long pendu à l'aplomb du panier du chariot, sont relativement longues et laborieuses.

Il arrive, assez fréquemment, qu'au cours des manipulations de permutations des barres de contrôle ou des grappes de bouchons, un déplacement inopiné du chariot, non verrouillé en position assignée, provoque la détérioration de la barre manipulée ou l'endommagement et la mise au rebut de la grappe de bouchons.

De même, une confusion des marques de repère du câble actionnant le chariot cause une dépose erronée d'une barre de contrôle ou d'une grappe bouchons entraînant ainsi des dommages à l'ensemble de l'installation.

La présente invention remédie à ces inconvénients en verrouillant le chariot dans la position assignée, en informant le personnel de la position occupée parle chariot et en empêchant le démarrage des moyens de manipulation des barres de contrôle ou des grappes de bouchons lorsque la position du chariot ne correspond pas à celle de la manipulation envisagée.

Ce dispositif de verrouillage est constitué, dans l'exemple de réalisation, d'une roue qui sous-tend sans glissement le câble du chariot. Cette roue est jumelée à un disque de verrouillage portant autant d'encoches qu'il y a de positions différentes assignées au chariot et dans lesquelles s'engage un verrou. Cette roue est également solidarisée à plusieurs disques, muni chacun d'une came actionnant des interrupteurs pour transmettre la position occupée par le chariot.

L'invention sera détaillée à l'aide des figures suivantes.

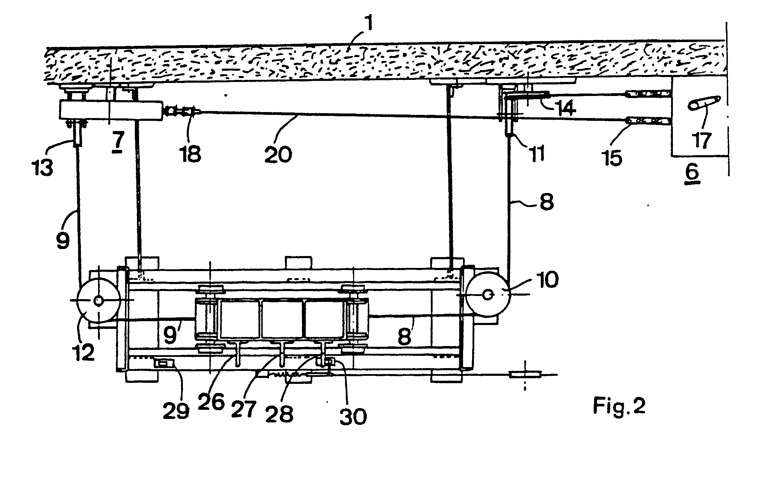

Les figures 1 et 2 sont des vues d'ensemble de l'installation de permutation des barres de contrôle et de son dispositif de verrouillage.

La figure 3 montre les détails du dispositif de verrouillage.

La figure 4 montre le dispositif de manipulation d'une grappe de bouchons.

Dans le fond d'une piscine 1 est arrimée une charpente 2 soutenant des rails 3 sur lesquels roule un chariot 4 actionné par un lien souple 5. Pour éviter le glissement entre le lien souple 5 et un dispositif d'entraînement 6 ou un dispositif de verrouillage 7, qui sont ultérieurment détaillés, des chaînes alternent avec des câbles pour former le lien souple 5 continu partant d'un côté du chariot 6 passant par le dispositif d'entraînement 6 et le dispositif de verrouillage 7 et aboutissant à l'autre côté du chariot 4. Les extrémités du lien souple 5 accrochées de part et d'autre du chariot 4 sont désignées respectivement par un câble 8 et un câble 9.

Le câble 8 est maintenu dans l'axe des rails 3 à l'aide d'une poulie 10 puis orienté vers la surface à l'aide d'une poulie 11 adossée à une paroi de la piscine. De même le câble 9 est maintenu dans l'axe des rails 3 par une poulie 12 puis orienté vers la surface par une poulie 13 adossée à la même paroi de la piscine 1.

En surface, la câble 8 est dirigé a l'horizontale par une poulie 14 avant d'être prolongé par une chaîne 15 qui s'engrène sur un demi-tour avec une roue dentée 16 du dispositif d'entraînement 6. Cette roue dentée 16 dont l'axe de rotation est vertical est entraînée par une manivelle 17 servant au déplacement du chariot 4.

En surface, le câble 9 si prolonge verticalement par une chaîne 18 qui, en s'engrénant avec une roue dentée 19 du dispositif de verouillage 7 sur un quart de tour, s'oriente à l'horizontale dans le plan contenant la chaîne 15. Les chaînes 15 et 18 sont réunies l'une à l'autre par un autre tronçon de câble 20.

En partant de la partie droite du chariot 4, le lien souple 5 est successivement formé du câble 8, de la chaîne 15 qui engrène avec la roue dentée 16 du dispositif d'entraînement 6, du câble 20, de la chaîne 18 qui engrène avec une roue dentée 19 du dispositif de verrouillage 7 et se termine par le câble 9 qui se rattache à la partie gauche du chariot 4.

Le chariot 4 comporte deux paniers 21 et 22 destinés à recevoir des assemblages et un emplacement du transfert 23 dans lequel se glisse la barre de contrôle à permuter.

Un tube-guide 24 fixé à une paroi de la piscine 1 assure un bon guidage vertical de la barre de contrôle manipulée par un treuil électrique 25.

Les assemblages sont déposés un par un dans les paniers 21 et 22 du chariot 4 par une machine de chargement non représentée.

Lors de ces manipulations, le chariot 4 doit occuper des positions bien déterminées pour déposer ou enlever une barre de contrôle d'un assemblage à l'autre en transitant éventuellement par l'emplacement de transfert 23. Pour chaque manipulation de permutation, il faut chaque fois amener le panier 21 ou 22 ou l'emplacement du transfert 23 exactement dans l'axe du tube-guide 24.

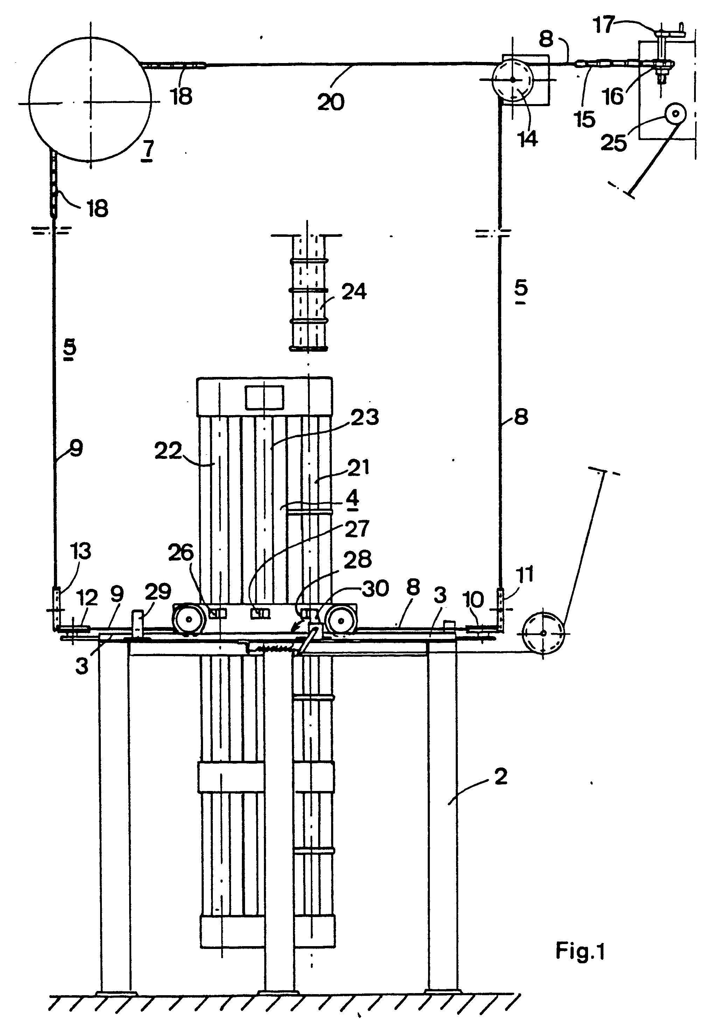

Dans le cas de l'exemple de réalisation montré en figure 1, quatre positions différentes du chariot 4 sont nécessaires. Trois de ces positions placent successivement le panier 21, l'emplacement du transfert 23 et le panier 22 sous le tube-guide 24.

La quatrième position correspond à un dégagement complet du chariot 4 vers la gauche. Ces quatre positions sont déterminées par trois éléments en saillie 26, 27, 28 fixés à un flanc du chariot 4 qui collaborent avec une butée fixe 29 et une butée escamotable 30.

La butée escamotable 30 est commandée par un câble depuis la surface pour s'effacer au passage d'un ou de plusieurs éléments en saillie 26, 27, 28. Un ressort de rappel ramène la butée escamotable 30 en position relevée.

Si, par exemple, nous considérons qu'en position de départ d'une manipulation le panier 21 est localisé, sous le tube de guidage 24, par l'élément en saillie 28 adossé à la butée escamotable 30 et que l'opération consiste à amener le panier 22 sous le tube guide 24, il faudra d'abord déplacer le chariot 4 légèrement vers la gauche pour permettre d'escamoter la butée 30. Puis, en maintenant toujours la butée 30 en position escamotée, on déplacera ensuite le chariot 4 vers la droite en prenant soin de ne pas relâcher la butée escamotable 30 qu'après le passage de l'élément en saillie 27. On continue à déplacer le chariot 4 vers la droite jusqu'à ce que l'élément en saillie 28 s'adosse à la butée escamotable 30 préalablement relâchée.

Dans les réalisations connues, la position du chariot 4 n'est pas verrouillé et le chariot 4 risque de se déplacer en causant de sérieux dommages à l'installation. Le dispositif de verrouillage revendiqué prévient tout déplacement inopportun du chariot 4.

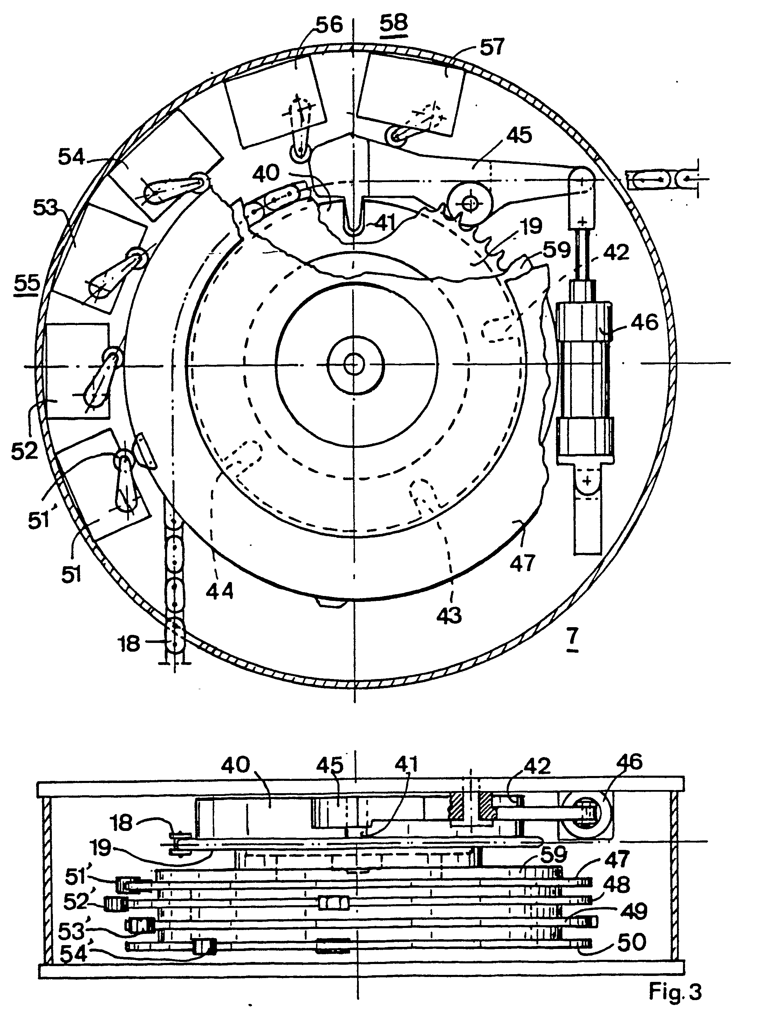

La figure 3 montre que le dispositif de verrouillage 7 comprend la roue dentée 19 qui engrène avec la chaîne 18. Un disque de verrouillage 40 est jumelé à la roue dentée 19 et porte des encoches 41, 42, 43, 44 dans lesquelles peut s'engager un verrou 45 commandé par un verin pneumatique 46. Selon que le verrou 45 est engagé dans l'une des encoches 41, 42, 43, le chariot se présente respectivement avec le panier 21, l'emplacement du transfert 23, le panier 22 sous le tube-guide 24. A l'encoche 44 correspond la position extrême gauche du chariot 4.

Dans l'exemple de réalisation montré en fig. 3 la roue dentée 19 est solidarisée par une couronne 59 à quatre disques 47, 48, 49, 50 portant chacun une came qui collabore avec les interrupteurs 51, 52, 53, 54 dont le rôle est d'indiquer sur un tableau synoptique, non représenté, la position occupée par le chariot 4. Ce jeu de cames monté sur les disques 47, 48, 49, 50 et les interrupteurs 51, 52, 53, 54 constitue un ensemble de positionnement 55.

Pour permettre le réglage des cames sur les disques 47, 48, 49, 50, chacune d'elles est positionnée sur son disque à l'aide de deux boutonnières et maintenue par deux vis de fixation.

Des interrupteurs 56 et 57 collaborent avec le verrou 45 dont la face arrière a un profil adéquat pour indiquer sur le tableau synoptique la position verrouillée ou déverrouillée du verrou 45.

Ces interrupteurs 56 et 57 constituent un ensemble de signalisation de verrouillage 58.

Le treuil électrique 25 ne peut se mettre en marche pour déplacer une barre de contrôle dans le tube-guide 24 que lorsque l'ensemble de verrouillage 58 indique que le verrou 45 est en position verrouillée et que le chariot 4 est repéré en bonne position par l'ensemble de positionnement 55.

Un tableau synoptique, non représenté, groupe toutes les informations transmises par l'ensemble du positionnement 55 et par l'ensemble de signalisation de verrouillage 58. A tout instant, le personnel connaît donc la position du chariot 4 et la position du verrou 45.

Le dispositif de verrouillage est débrayable par une manoeuvre qui commande à la fois le dégagement du verrou 45 et la mise sous tension du treuil électrique 25. Il est évident que l'invention couvre d'autres exemples de réalisation tels que le remplacement de la chaîne 18 par une courroie crantée ou la substitution des quatre disques 47, 48, 49, 50 muni chacun d'une came par un seul disque portant les quatre cames simultanément. De même le verrou peut être commandé par d'autres moyens connus.

Le dispositif de verrouillage s'utilise également lorsqu'on associe au tube guide 24 un dispositif de manipulations d'une grappe de bouchons.

Dans ce cas l'ensemble de positionnement 55 porte des cames et des interrupteurs supplémentaires pour rendre compte sur le tableau synoptique de la position des paniers du chariot par rapport à l'axe du dispositif de manipulations d'une grappe de bouchons.

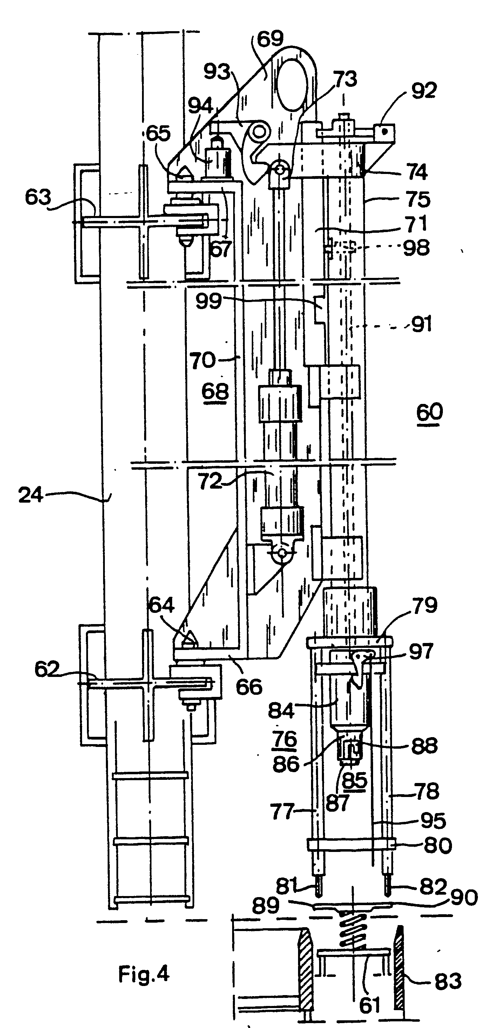

Sur la figure 4, le dispositif de manipulations 60 d'une grappe de bouchons 61 s'appuie sur des étriers 62 et 63 servant à fixer le tube guide 24 à une paroi de la piscine 1. Les deux étriers 62 et 63 sont munis d'ergots 64 et 65 sur lesquels viennent s'accrocher des embases 66 et 67 solidaires d'une charpente 68 du dispositif de manipulations 60. Cette charpente 68 est formée d'une plaque de base 69 disposée parallèlement à la paroi de la piscine, d'une plaque support 70 perpendiculaire à la plaque de base 69 et s'étendant entre les deux embases 66 et 67, d'une plaque de guidage 71 s'étendant parallèlement à la moitié supérieure de la plaque support 70. Sur la plaque support 70 est adossé un vérin 72 dont la tête 73 s'articule sur un coulisseau 74 auquel est solidarisé un tube de commande 75 disposé parallèlement au tube de guidage 24. L'entr'axe entre le tube de commande 75 et le tube de guidage 24 est identique à l'entr'axe entre les paniers 21 et 22 du chariot 4. Le tube de commande 75 porte en bout une tête de préhension 76 formée de quatre colonnes disposées en carré, dont seules les colonnes 77 et 78 sont visibles sur la figure 4, et maintenues par deux entretoises 79 et 80. Chaque colonne porte à son extrémité inférieure un embout conique désigné respectivement par 81 et 82 pour les colonnes 77 et 78. Ces embouts coniques peuvent s'insérer dans la partie supérieure d'un assemblage 83. Les colonnes 77, 78 servent au guidage d'un cylindre 84 au bout duquel se trouve un mandrin 85 formé d'un tube 86 à l'intérieur duquel coulisse un tampon télescopique 87. Le tube 86 porte deux échancrures diamétralement opposées, seule l'échancrure 88 est visible sur la figure 4. Ces échancrures 88 ont une découpe permettant une fixation en baïonnette de la grappe de bouchons 61 par ses deux ailes 89 et 90. Un arbre 91 disposé à l'intérieur du tube de commande 75 permet d'animer le tube 86 du mandrin 85 d'un angle de rotation déterminé à l'aide d'un vérin 92 relié à l'extrémité supérieure de l'arbre 91.

Toute descente accidentelle de la tête de préhension 76 est empêchée par un cliquet 93 dont le dégagement est commandé par un vérin 94. Le dispositif de manipulations 60 fonctionne de la manière suivante dans son mouvement descendant. Le vérin 94 débloque le cliquet 93 pour que le vérin 72 imprime à la tête de préhension 76 un mouvement de descente. Lorsque les embouts coniques 81 et 82 sont correctement positionnés sur l'assemblage 83, une tige témoin 95 relève un cliquet 97 pour permettre à la tête de préhension 76 de coulisser entre les barres 77 et 78 pour poursuivre le mouvement de descente et amener le tube 86 contre la grappe de bouchons 61 en comprimant le tampon 87. A ce moment, un ergot 98 solidaire de l'arbre 91 se trouve en face d'une échancrure 99 pratiquée dans la plaque de guidage 71 pour permettre la rotation de l'arbre 91 et du cylindre 86 et ainsi permettre l'introduction des ailes 89 et 90 de la grappe de bouchons 61 dans les échancrures 88 du cylindre 86. Lorsque la grappe de bouchons 61 est ainsi solidarisée à la tête de préhension 76, celle-ci est remontée par le vérin 72. Cette grappe de bouchons 61 pourra ensuite être déposée sur un autre assemblage disposé dans un autre panier du chariot 4 après déplacement du chariot 4.

Dans une variante du dispositif de manipulations 6 représenté en figure 4, les mouvements ascendants et descendants de la tête de préhension 76 sont assurés par un câble actionné par un treuil situé au-dessus du niveau d'eau de la piscine 1. Cette variante offre l'avantage d'éviter l'immersion d'interrupteurs de fin de course pour connaître la position exacte de la tête de préhension 76.

Une autre variante encore consiste à remplacer la tige témoin 95 par un coulisseau disposé autour d'un embout conique 82 pour commander le relèvement du cliquet 97 lorsque la tête de préhension 76 est bien positionnée sur l'assemblage 83.

**Revendications**

1. Dispositif de verrouillage d'une installation de permutation de barres de contrôle et de grappes de bouchons comportant un chariot (4), se déplaçant sur rails (3), actionné par un ispositif d'entraînement (6) à l'aide d'un lien souple (5) continu, le chariot étant muni de deux paniers (21 et 22) et d'un emplacement de transfert (23) et de trois éléments en saillie (26, 27, 28) qui arrêtent le dit chariot (4) par une butée fixe (29) et une butée escamotable (30), un tube-guide (24), un treuil électrique (25) caractérisé en ce que le dispositif de verrouillage comporte une roue (19) qui sous-tend sans glissement le lien souple (5) et qui est jumelée à un disque de verrouillage (40) profilé pour collaborer avec un verrou (45) qui immobilise le chariot (4) en position assignée pour permettre la permutation des barres de contrôle à l'aide du tube guide (24) ou de grappes de bouchons (61) en utilisant une installation annexe (60) disposée parallèlement au tube guide (24).

2. Dispositif de verrouillage selon la revendication 1 caractérisé en ce que l'installation annexe, servant à la permutation de grappes de bouchons (61), prend appui sur le tube guide (24).

3. Dispositif de verrouillage selon une des revendications précédentes caractérisé en ce que la roue (19) est associée à des moyens (47, 54) transmettant la position du chariot (4).

4. Dispositif de verrouillage selon une des revendications précédentes caractérisé en ce que la roue (19) est associée à des moyens (56, 57) indiquant la position du verrou (45).

5. Dispositif de verrouillage selon la revendication 3 caractérisé en ce que les moyens indiquant la position du chariot (4) sont des cames réglables portées par un ou plusieurs disques (47, 50) qui collaborent avec des interrupteurs (51, 54) reliés à un tableau synoptique.

6. Dispositif de verrouillage selon la revendication 4 caractérisé en ce que les moyens indiquant la position du verrou (45) sont constitués de la face arrière du verrou (45) conformée pour collaborer avec deux interrupteurs (56, 57) indiquant respectivement la position verrouillée et la position déverrouillée sur le tableau synoptique.

7. Dispositif de verrouillage selon la revendication 1 caractérisé en ce que la roue qui sous-tend sans glissement le lien souple (5) est une roue dentée (19) qui engrène avec une chaîne (18) insérée dans le lien souple (5).

8. Dispositif de verrouillage selon la revendication 2 caractérisé en ce que l'installation annexe prenant appui sur le tube guide (24) est un dispositif de manutentions (60) constitué d'une charpente (68) servant à guider, parallèlement à l'axe du tube guide (24) et selon un entr'axe égal à celui de deux paniers du chariot (4), une tête de préhension (76) pour la pose et dépose d'une grappe de bouchons (61) sur un assemblage (83).


**Patentansprüche**

1. Verriegelungsvorrichtung für eine Anlage zum Vertauschen von Kontrollstäben und Verschlußbündeln, aus einem Wagen (4), der auf Schienen (3) verschoben wird und mit Hilfe einer kontinuierlichen, flexiblen Verbindung (5) durch eine Antriebsvorrichtung (6) betätigt wird, und der mit zwei Körben (21 und 22) und einem Transferplatz (23), sowie drei überstehenden Teilen (26, 27, 28) versehen ist, wobei diese Teile den besagten Wagen (4) mittels eines festen Anschlags (29) und eines umlegbaren Anschlags (30) anhalten, sowie aus einem Führungsrohr (24) und einer elektrischen Winde (25), dadurch gekennzeichnet, daß die Verriegelungsvorrichtung ein Rad (19) aufweist, das die flexible Verbindung (5) schlupffrei umlenkt, und das mit einer profilierten Verriegelungsscheibe (40) fest verbunden ist, um mit einem Riegel (45) zusammenzuwirken, der den Wagen (4) in der gewählten Position feststellt, um die Vertauschung der Kontrollstäbe mit Hilfe des Führungsrohrs (24), oder die Vertauschung von Verschlußbündeln (61) unter Verwendung einer parallel zu dem Führungsrohr (24) angeordneten Hilfsanlage zu ermöglichen.

2. Verriegelungsvorrichtung gemäß Anspruch 1, dadurch gekennzeichnet, daß die zum Vertauschen von Verschlußbündeln (61) dienende Hilfsanlage auf dem Führungsrohr (24) aufliegt.

3. Verriegelungsvorrichtung gemäß einem der vorhergehenden Ansprüche, dadurch gekennzeichnet, daß das Rad (19) mit Mitteln (47, 54) versehen ist, die die Position des Wagens (4) übermitteln.

4. Verriegelungsvorrichtung gemäß einem der vorhergehenden Ansprüche, dadurch gekennzeichnet, daß das Rad (19) mit Mitteln (56, 57) versehen ist, die die Position des Riegels (45) anzeigen.

5. Verriegelungsvorrichtung gemäß Anspruch 3, dadurch gekennzeichnet, daß die Mittel, die die Position des Wagens (4) angeben, einstellbare Nocken sind, die auf einer oder mehreren Scheiben (47, 50) angebracht sind und mit Schaltern (51, 54) zusammenwirken, die mit einer Übersichtstafel verbunden sind.

6. Verriegelungsvorrichtung gemäß Anspruch 4, dadurch gekennzeichnet, daß die Mittel, die die Position des Riegels (45) angeben, aus der Rückseite des Riegels (45) bestehen, die eine solche Form aufweist, daß sie mit zwei Schaltern (56, 57) zusammenwirkt, die die verriegelte Position bzw. die entriegelte Position auf der Übersichtstafel anzeigen.

7. Verriegelungsvorrichtung gemäß Anspruch 1, dadurch gekennzeichnet, daß das Rad, das die flexible Verbindung schlupffrei umlenkt, ein Zahnrad (19) ist, in das eine in in die flexible Verbindung (5) eingefügte Kette (18) eingreift.

8. Verriegelungsvorrichtung gemäß Anspruch 2, dadurch gekennzeichnet, daß die auf dem Führungsrohr (24) aufliegende Hilfsanlage eine Handhabungsvorrichtung (60) ist, die aus einem Gerüst (68) besteht, das dazu dient, einen Greifkopf (76) parallel zu der Achse des Führungsrohrs (24) und in einem Achsabstand, der gleich dem Achsabstand von zwei Körben des Wagens (4) ist, zu führen, um ein Verschlußbündel (61) bei einer Brennstoffkassette (83) aufzusetzen oder abzuheben.


**Claims**

1. A blocking device on an installation to permute control rods and stopper spiders, comprising a carriage (4) which moves along a track (3) and is powered by a drive mechanism (6) with the aid of a continuous flexible linkage (5), said carriage being provided with two cages (21 and 22) and a transfer bag (23) and three projecting members (26, 27, 28) which bring the carriage (4) to a halt by means of a dead stop (29) and a retractable stop (30); a tubular guide (24); and an electric winch (25), characterieed in that the blocking device exhibits a wheel (19) which subtends the flexible linkage (5) without slippage and is paired with a blocking disk (40) profiled so as to cooperate with a latching member (45) which immobilises the carriage (4) in a designated position to allow permutation of the control rods with the aid of the tubular guide (24) or of stopper spiders (61) by using an additional installation (60) disposed parallel to the tubular guide (24).

2. The blocking device according to Claim 1, characterised in that the additional installation used for the permutation of stopper spiders (61) is supported on the tubular guide (24).

3. The blocking device-according to one of the preceding claims, characterised in that the wheel (19) is connected to means (47, 54) communicating the position of the carriage (4).

4. The blocking device according to one of the preceding claims, characterieed in that the wheel (19) is connected to means (56, 57) indicating the position of the latching member (45).

5. The blocking device according to Claim 3, characterised in that the means indicating the position of the carriage (4) are adjustable came exhibited by one or more disks (47, 50) which cooperate with switches (51, 54) linked to a synoptical switchboard.

6. The blocking device according to Claim 4, characterised in that the means indicating the position of the latching member (45) are constituted by the rear face of the latching member (45) which is adapted so as to cooperate with two switches (56, 57) which respectively indicate blocked and unblocked positions on the synoptical switchboard.

7. The blocking device according to Claim 1, characterised in that the wheel subtending the flexible linkage (5) without slippage is a toothed wheel (19) which meshes with a chain (18) installed in the flexible linkage (5).

8. The blocking device according to Claim 2, characterised in that the additional installation supported on the tubular guide (24) is a manipulating device (60) consisting of a framework (68) used to guide a gripping head (76) parallel to the axis of the tubular guide (24) and along an axis equidistant between two cages of the carriage (4) so as to fit a stopper spider (61) onto an assembly (83) and withdraw it therefrom.

Fig.1

Fig.2

Fig. 3

Fig.4